(19)

Europäisches
Patentamt

European
Patent Office

Office européen
des brevets

(11)  **EP 3 683 870 A1**

(12)  **EUROPEAN PATENT APPLICATION**
published in accordance with Art. 153(4) EPC

(43) Date of publication:
**22.07.2020  Bulletin 2020/30**

(21) Application number: **18851120.8**

(22) Date of filing: **29.08.2018**

(51) Int Cl.:
*H01M 4/36* (2006.01)          *H01M 4/505* (2010.01)
*H01M 10/052* (2010.01)     *H01M 10/0525* (2010.01)

(86) International application number:
**PCT/CL2018/050076**

(87) International publication number:
**WO 2019/041057 (07.03.2019 Gazette 2019/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **01.09.2017  CL 20172221**

(71) Applicant: **Universidad de Antofagasta
Antofagasta (CL)**

(72) Inventors:
- **GRAGEDA ZEGARRA, Mario Sandro
  Antofagasta (CL)**
- **LLUSCO QUISPE, Aleksei Windsor
  Antofagasta (CL)**
- **USHAK DE GRAGEDA, Svetlana Nikolaevna
  Antofagasta (CL)**

(74) Representative: **Isern Patentes y Marcas S.L.
Avda. Diagonal, 463 Bis, 2°
08036 Barcelona (ES)**

(54)  **MANGANESE SPINEL DOPED WITH MAGNESIUM, CATHODE MATERIAL COMPRISING SAME, METHOD FOR PREPARING SAME AND LITHIUM ION BATTERY COMPRISING SAME**

(57)    The present invention relates to the field of technologies for powering portable electronic parts, electrical tools, hybrid and electric vehicles and storage systems for renewable energy sources. Specifically, the invention relates to lithium ion batteries, more specifically to an active compound useful for manufacturing the cathodes in said lithium ion batteries. Even more specifically, the present invention relates to a manganese spinel doped with magnesium, a cathodic material comprising the same, the method for preparing thereof and lithium ion batteries comprising such spinel.

EP 3 683 870 A1

**Description**

Field of the Invention

The present invention relates to the field of technologies for powering portable electronic part, electrical tools, hybrid and electric vehicles, and to storage systems from renewable sources. In particular, the invention relates to lithium ion batteries, and more specifically, to an active compound useful for the manufacture of cathodes in said lithium ion batteries. Still more particularly, the present invention relates to magnesium doped magnesium spinel, cathodic material comprising the same, preparation method and lithium ion batteries comprising thereof.

Background

Lithium-ion batteries have an incomparable combination of high energy density and power; which is why they are the chosen technology for powering portable electronic parts, electrical tools, hybrid and electric vehicles, and to energizing storage systems from renewable sources.

At the present, cobalt lithium oxide, $LiCoO_2$ is the most widely used compound in the manufacture of cathodes for lithium ion batteries; However, due to its high cost, high toxicity, thermal instability and safety problems, its application is limited to small format batteries. In contrast, lithium manganese spinel, $LiMn_2O_4$ is the most promising cathode material for large-format lithium-ion batteries. This is due to its diffusion of lithium ions in three dimensions, low cost, low toxicity and abundance of its raw materials. However, $LiMn_2O_4$ presents problems such as poor cycling at high temperatures (50°C), Mn dissolution, electrolyte decomposition at high chemical potential, Jahn-Teller distortion and structural instability; which must be resolved for commercial application.

In order to overcome the different limitations of $LiMn_2O_4$, the present invention solves the problem of improving the structural and electrochemical performance: (1) Reducing particle size at a nanometric scale and (2) Doping structures with magnesium ions. For this, the sol-gel synthesis method was used, assisted by ultrasound and raw materials of Li and Mg were used, typical of the Salar de Atacama, Chile.

Among the patent documents related to the invention, it is possible to mention: CN 106207153 which describes a method for rapidly preparing a positive electrode material $LiMn_2O_4$ doped with boron, $LiB_{0,04}Mn_{1,96}O_4$, comprising putting first the reagents, namely lithium nitrate, lithium acetate, manganous nitrate, manganese acetate and a boric acid in a melting pot at a molar ratio of Li to Mn to B of 1: 1.96: 0.04; heating, melting and mixing the reactants uniformly in a preheating oven, put a mixture in a muffle furnace for a flameless combustion reaction in liquid phase, carry out the conservation of the heat for a certain period of time, cooling and grinding a powder product to obtain a spinel electrode material $LiB_{0,04}Mn_{1,96}O_4$, where the positive electrode material for a lithium ion battery has the characteristics of being simple in operation, high in speed of synthesis and low cost, and mass production is easy to implement. The technical problem of an attenuation arises of the capacity of a spinel lithium manganese material in charge or discharge cycles and doping said material with B to repair such deficiency.

US2016329563 discloses an active cathode material coated with manganese oxide of lithium metal with spinel structure doped with fluorine, which can be included in a secondary lithium battery and a method for preparing the same. The cathode active material has improved chemical stability and provides improved charge/discharge characteristics at high temperature (55-60°C) and high speed. The cathode active material allows lithium ions to pass easily through the coating layer and is chemically stable, and therefore can be used effectively as a cathode active material for a high power lithium secondary battery. The cathode active material has a shell-core structure where the shell is a cover layer of lithium manganese metal oxide with spinel structure doped with fluorine which can be represented by the formula $Li_1M_xMn_{2-x}O_{4-n}F_n$, where x is 1/(4-z), z is an oxidation number of M, and n is a real number that satisfies $0 < n < 0.3$. The nucleus is a lithium manganese oxide with spinel structure (LMO). The lithium manganese oxide metal shell with spinel structure and core are used in a weight ratio of 1: 20-200 and have a thickness of 1 nm-1 $\mu$m.

It focuses on solving the problem of preparing lithium manganese oxide with a spinel structure at low cost, the Jahn-Teller effect, the gradual fading of the capacity of a secondary lithium battery, the destruction of the cathode by the manganese corrosion during the cycles of loading and unloading, the increase in impedance and the decrease in coulombic efficiency by the formation of a layer at the solid-electrolyte interface on the surface of the negative electrode. And for that reason, it proposes the doped material described above.

CN106058205 describes a cathode material composed of doped nickel-lithium cobalt oxide and a method of preparing the same, which comprises: (1) dissolving the manganese ion raw materials in water to prepare a solution A and dissolving a precipitator in the water to prepare a solution B; (2) adding a doped cobalt nickel lithium oxide precursor ($LiNi_xCo_yM_{h-y}O_2$, where M is Mn, Al, Cr, Fe, Mg, Zn or Ti) in solution A, and adding Solution B to solution A while stirring; after completion of the reaction, filtering the mixed solution, collecting solids, and cleaning and drying solids, thereby obtaining solids A; and (3) placing solids A and a lithium source in an oxygen atmosphere furnace to perform high temperature toasting, thereby obtaining products after roasting, namely the cathode material composed of cobalt oxide nickel lithium doped existing in a core structure, whose surface is coated with a spinel layer of lithium manganese. According to the method of preparation, a layer of lithium manganese spinel cathode material is coated on the surface of cobalt nickel lithium oxide to improve the performance and life cycle of a battery cell in use; The spinel of the outermost layer isolates the metallic nickel and avoids contacting the electrolyte directly, so that the stability and safety of the battery can be effectively improved.

The method seeks the production of a material that improves the use of the single cell efficiency process and the life cycle since the separation of the spinel phase from the metallic nickel and the direct contact of the electrolyte can effectively improve the stability and safety of the drums.

CN105932250 describes a method of preparing and applying a structured spinel with metallic doping and a cathodic material containing nickel coated with a fast ionic conductor, comprising: dissolving and mixing organic titanium salt, a cathode material containing nickel and a salt metallic doped obtaining a dispersion liquid; transferring the dispersion liquid to a hydrothermal reaction vessel to carry out a hydrothermal reaction, so that a precursor is obtained; and baking the precursor at high temperature to obtain the cathode material containing nickel from a spinel structured with metallic doping and a layer coated with an ionic conductor, which is dense, uniform and good in stability and ionic conductivity. The nickel-containing cathode material can be used to prepare a lithium-ion battery with excellent performance of number of cycles and rate capability; and it is low cost, easy to operate, friendly to the environment and can be applied to industrial production. The cathode material containing nickel is $LiNi_xMn_{2-x}O_4$ (0.1 < x < 0.8) having a spinel structure and/or $LiNi_{1-x-\#}$ On having a structure per layer and/or material of cathode enriched in manganese lithium.

It seeks to develop a cathode material with long life and high performance from a simple, low cost and environmentally friendly method.

CN105789568 describes a positive electrode material of a lithium ion battery and a method of preparation thereof, wherein the lithium-rich lithium manganese oxide material doped with a sulfur element has the formula $Li_{1,2}M_xMn_{2-x}O_{4-y}S_y$, where 0 > x > 0.2, 0 > y > 0.2, and M is Li, Na, K, Mg, Ca, Sr, Ba, Ti, V, Cr, Fe, Co, Ni, Cu, Zn, And, Zr, Nb, Mo, Ag, Ce, Sm, Eu, Al, Si, In, Ga, Ge, Sn, Pb, B, Sb, Bi, Se, Te, or combinations thereof. Positive doped ions and sulfur atoms are uniformly doped in the crystal lattice of a lithium manganese oxide material according to a certain ratio using the sol-gel method and a chelator to inhibit the Jahn-Teller effect of the oxide material of manganese lithium. A low specific capacity defect of manganese lithium oxide caused by the fact that the existing lithium manganese oxide spinel can only use a capacity of an area of 4V, the lithium-rich lithium manganese oxide material doped with A sulfur element can use capacities of both, that is, the 4V area and an area of 3V, and the specific discharge capacity of the lithium-rich lithium manganese oxide material doped with sulfur elements is greater than 180 mAh/g. The lithium-rich lithium manganese oxide material doped with the sulfur element can be used as the positive electrode material of small or large lithium ion batteries.

It faces two problems associated with lithium manganese oxide materials: its low capacity (110 mAh/g or similar) and problems of falling capacity. Mainly addressing the attenuation of capacity by dissolution and Jahn-Teller effect caused by manganese, and therefore, proposes doping cationic with lithium ion and doping anionic with sulfur, which expand the area of useful capacity in 3V and 4V.

CN104701522 describes a method of preparing a lithium manganese modified positive material from a lithium ion battery comprising: (1) synthesizing a precursor by adopting a liquid phase temperature difference method to obtain doped manganese carbonate precursor powder with aluminum, where the carbonate is preferably lithium carbonate, the manganese source compound, preferably manganese sulfate, and the aluminum salt, preferably aluminum nitrate, are in a molar ratio of 39: 1 to 9: 1 to 0.2 mol/L, an aqueous solution 0.2 mol/L to 0.5 mol/L and the temperature of the two aqueous solutions are controlled within the range of 0 to 10°C and are mixed rapidly with 10°C/min at 50-80°C, after matured for 30 minutes, filtered and dried at 40°C to obtain a precursor powder of manganese carbonate doped aluminum; (2) calcination of the precursor manganese carbonate powder obtained during 2-5 hours under the temperature of 600-800°C, in order to obtain a manganese oxide powder doped with aluminum with a spherical structure of ionic holes and being a particle diameter 1-3 microns where calcination occurs at a temperature between 600-800°C for 2 to 5 hours; (3) uniformly mixing the powder carbonate-manganese precursor doped with aluminum and lithium carbonate according to the ratio of (1 to 1) - (1.05 to 1), keeping temperature for 20 hours under a temperature of 900°C for 20 hours, cooling, grinding, repeating the process from baking until grinding for 3 times, to obtain a positive material sample with modified spinel structure of lithium manganese with a particle diameter of 1-2 microns. The method uses low cost and easy to obtain raw materials, the microstructure is regular and uniform, the doping effect is good and the modified lithium manganate prepared is evident in the loading and unloading performances and good in circularity. Solve the technical problem of $LiMn_2O_4$ capacity loss.

CN104538625 discloses a method of preparing ion lithium battery positive electrode material of doped lithium manganese dioxide with high magnification and excellent cyclization performance comprising placing the reagents of lithium nitrate, manganese acetate and copper acetate in a melting pot, adding an appropriate amount of nitric acid, burning in a muffle furnace and preserving the heat, thus obtaining a spinel $LiCu_{0.05}Mn_{1.95}O_4$. The positive electrode material of lithium-ion battery $LiCu_{0.05}Mn_{1.95}O_4$. It has characteristics of simplicity of operation, fast synthesis speed, low cost and scale production, being easy to achieve.

The main advantage is a rapid combustion synthesis reaction and within a short period of time to achieve complete crystals, products of particular small size, which leads to a production process of $LiMn_2O_4$ conductive spinel.

US2015089797 describes a doped spinel of the following formula: $Li_{1\pm w}Me_{1v}Me_{2x-v}Mn_{2-x-y}Ti_yO_{4-z}F_z$ where, $0 \leq w < 1$, $0.3 < x \leq 0.7$, $0.3 < v < 0.7$, $x > v$, $0.0001 \leq y \leq 0.35$ and $0.0001 \leq z \leq 0.3$. $Me_1$ is a metal selected from a group of elements consisting of Cr, Fe, Co, Ni, Cu and Zn. $Me_2$ is a metal selected from a group of elements consisting of Ni, Fe, Co, Mg, Cr, V, Ru, Mg, Al, Zn, Cu, Cd, Ag, Y, Se, Ga, In, As, Sb, Pt, Au and B. It also provides a lithium ion battery comprising said doped spinel and provides a doped spinel or a high voltage doped spinel that can be cycled stably with more than one lithium per unit.

CN104112856 describes a pre-combustion treatment comprising the synthesis of a lithium manganese spinel cathode material doped with metallic aluminum, comprising: mixing lithium carbonate, electrolytic manganese dioxide and hydrated aluminum nitrate, preferably nitrate aluminum hexahydrate in a ratio of $Li_2CO_3$: EMO: $Al(NO_3)_3 \cdot 9H_2O$ from 1.0 to 1.05: 1.7 to 2.0: 0 to 0.3 and where preferably the content of manganese dioxide is greater than 91%, and $Li_2CO_3$ and $Al(NO_3)_3 \cdot 9H_2O$ are analytical grade; taking absolute ethanol as dispersant, subjecting the mixture to grinding and drying to obtain a reaction precursor; Preheating the precursor for 4 to 6 hours at a temperature of 400 to 500°C at a rate of 5-10°C/min, burning for 6 to 36 hours at a temperature of 750°C at a rate of 5-10°C/min, placing the precursor in a tubular oven to carry out an annealing treatment in an atmosphere of oxygen gas at 600°C where it is maintained for 6 hours, cooling naturally to room temperature, crushing and sieving to obtain the cathodic material of a Lithium-ion battery with a mesh size of 200-325. The prepared cathode material has the advantages of high capacity and good stability in cycling. Compared to the prior art, the technology is simple and feasible, the cost is low and the method is advantageously applied to industrial production.

Providing lower cost of cathode material raw materials for lithium ion batteries to improve electrochemical stability of materials lithium manganese oxide spinel type, so that they increase the capacity, stability in cycling; it also improves the high temperature solid phase synthesis of lithium magnesium oxide cathode material doped with aluminum.

CN102569781 discloses a high-voltage lithium-ion battery cathode material and its method of preparation, wherein said high-voltage lithium-ion battery cathode material is a solid solution material with a stratiform and spinel composite structure and formula $Li_xNi_{0.25-z}Mn_{0.75-z}M_{2z}O_y$, where M is one or two of doped metals selected from Co, Al, Cr, Mn and Ga, $2 > x > 0$, $3 > y \geq 2$ and $0.25 > z > 0$. The cathodic material has the stratiform composite structure and spinel, maintains the high specific capacity of a solid solution material based on manganese, improves the stability of cycling and the thermal stability of the material. The impedance of the cathode material is reduced by doping, so that the thermal stability of the material is further improved, and the heat release is reduced to improve the overall electrochemical performance of the material. The material preparation process has high control capacity, the manufacturing cost is low and the manufacturing process has high reproducibility and high batch stability, it facilitates the production management of high voltage materials and high specific capacity.

It provides a high-voltage lithium-ion battery cathode material comprising a solid solution of high specific capacity that improves cycling performance and thermal stability of the material, reduces production costs, improves production stability in batches.

CN102306767 relates to a method for preparing spinel-type lithium manganese that serves as the cathode material of a lithium-ion battery comprising: 1) mixing manganese oxide selected from electrolyte or chemical $MnO_2$, $Mn_3O_4$ or MnOOH, a lithium source material selected from LiOH, $Li_2CO_3$ or $LiNO_3$ and a metal oxide as dopant element, where the selected metal is Li, Al, Cr, Co, Mg, Ca, Ni, Zn, or a mixture thereof; and 2) uniformly mixing the mixture obtained in step 1), and subjecting it to a continuous sintering gradient inside a high temperature sintering furnace (sintering steps: sintering at a temperature of between 1,000 and 1,200°C) for 3 to 5 hours in the first stage, sintering at a temperature between 800 and 900°C for 4 to 6 hours in the second stage and sintering at a temperature between 500 and 700°C for 5 to 8 hours in the third stage), introducing compressed air simultaneously. Next, the sintered product is subjected to natural cooling, trituration and selection process to obtain the cathodic material. The procedure is simple; the crystallinity and the surface of the cathodic material are controlled through ultra-high temperature sintering to reduce the rate of manganese dissolution; while the process of sintering at low temperatures controls or eliminates oxygen deficiencies.

It focuses on improving the crystalline structure of lithium manganese oxide and therefore its poor cycling stability due to manganese dissolution factors and oxygen deficiencies, and therefore, it reduces and eliminates or controls the oxygen deficiencies in the crystalline structure of the manganese spinel. The doping of the crystalline structure of lithium manganese oxide with metallic elements of Mg, Al or Cr is carried out to improve stability during cycling.

CN102122715 describes a lithium manganese oxide doped with indium comprising a spinel of manganese lithium and a metal element of indium, which is 0.02 to 5% of the mass of the lithium manganese spinel doped with indium and its method of preparation comprising: uniformly mixing a lithium source substance and manganese dioxide powder according to the mole ratio of Li to Mn which is (0.50-0.65) to 1 and adding source substance of powdered indium simultaneously; placing the mixture in an air or oxidation environment whose temperature is between 600 and 1,000°C;

then uniformly mixing the mixture and baking for 8 to 32 hours; Cooling and sifting to obtain lithium manganese oxide doped with indium. Wherein said metal element of indium is present within the lithium manganate doped with indium in the form of indium trioxide and indium oxide; which are formed on the spinel-type lithium manganese surface or on the micropores of the surface or penetrating the internal structure to form a compound of formula $LiMn_{2-x}In_xO_4$, where $0 < x < 0.1$. Where the lithium source material is a mixture of one or more of lithium carbonate, lithium hydroxide and lithium nitrate. The lithium manganese oxide doped with indium can be used as a positive electrode material of a small lithium-ion battery or a lithium-ion power battery and has the advantages of high cycling stability, strong charge holding capacity and low loss of storage capacity.

Providing good cycling stability, strong load holding capacity, and low loss of lithium storage capacity; In addition, the application of lithium manganese oxide doped with indium in lithium ion batteries, provides a process of preparation of low energy consumption to obtain a product of good quality.

CN104752711 is referring a method of preparing a $LiMn_2O_4$ cathode material doped with nickel, which has a high multiplicative power and efficiency in the cycling of a lithium ion battery, which comprises: putting for the first time in a preheated constant temperature muffle furnace, reagents including lithium acetate, manganese acetate and nickel acetate in a melting pot, and then baking in the muffle furnace for the second time to obtain a $LiNi_{0.05}Mn_{1.95}O_4$ spinel type electrode material. The method of preparing the material for the $LiNi_{0.05}Mn_{1.95}O_4$ spinel type cathode, of lithium-ion battery, prepared by the invention has the characteristics of being simple to operate, fast in synthesis speed, low cost and easy to produce on a large scale; and in addition, the cycling time of the $LiNi_{0.05}Mn_{1.95}O_4$ spinel-type cathode material is increased as cathode material.

It provides a method of preparation of broad efficiency, reduces manufacturing costs, allows a fast and efficient preparation and that improves the performance of the lithium ion battery, as well as the capacity retention speed during cycling of the $LiNi_{0.05}Mn_{1.95}O_4$ spinel doped with nickel.

US5928622 is referring a high capacity $LiMn_2O_4$ compound used for a nonaqueous electrolyte lithium ion battery, more particularly, to a method for preparing $LiMn_2O_4$ intercalated compound doped with Li and Co ions, which comprises the following stages of: synthesizing spinel type $LiMn_2O_4$ powder; dissolving and treating the $LiMn_2O_4$ powder in the solution to adsorbing Li and Co ions; and a heating treatment of said $LiMn_2O_4$ to obtain $LiMn_2O_4$ doped with Li and Co.

It addresses the reduction in discharge capacity resulting from repeated charges and discharges in a lithium ion battery $LiMn_2O_4$ due to the dissolution of $Mn^{+3}$ ion in $LiMn_2O_4$ and the structural instability of the Jahn-Teller transition.

US6274278 is referring a process for preparing an oxide of lithium manganese compound of spinel type represented by the formula $Li_xMn_{(2-y)}M_{y1}B_{y2}O_4$ in which M represents at least one element selected from Al, Cr, Fe, Ni, Co, Ga and Mg; $0.9 < x < 1.1$; $y = y1 + y2$, where $0.002 < y < 0.5$, $0 < y1 < 0.5$ and $0.002 < y2 < 0.1$ or the formula $Li_xMn_{(2-y)}M_yO_4$, which is the same that the previous formula except that y2 is 0. In the first formula M and x are each as previously defined and $0.002 < y < 0.5$; and an active cathode material for a rechargeable lithium ion battery comprising spinel-type manganese lithium oxide having improved charge/discharge characteristics produced by the method described above. The composite oxide thus produced is an improved novelty particularly in a charge/discharge cycle characterized at a high ambient temperature (50°C or higher), and therefore it is very useful from the point of view of the Industry.

Providing a cathode material for lithium ion batteries or secondary battery of 4 V that derives from the $LiMn_2O_4$ spinel, where part of the manganese is replaced by a metallic element that has the effect of maintaining the capacity of a sufficiently constant battery during a loading/unloading cycle without causing a significant loss in capacity.

US5316877 teaches an electrochemical cell comprising a cell container and a cathode located in said container, wherein the cathode comprises at least one electrochemically active compound of lithium, manganese and oxygen, having a spinel-like structure and formula $Li_1D_xMn_{2-x}O_{4+\delta}$, where it is true that $0 \leq x < 0.33$; $0 \leq \delta < 0.5$, and the values of x and $\delta$ are such that the oxidation state N of the manganese cation is $3.5 < N < 4.0$; D is a mono- or multi-valent metal cation. Particularly, D may be a metal catalyst other than L, such as a divalent metal cation such as Mg. It may also be a monovalent metal cation other than L, such as Ag or a trivalent metal cation such as $Co^{3+}$; and b is the oxidation state of D. An electrolyte is also located in the container of the cell. The cell, electrolyte and cathode container are arranged to allow the application of a charge potential on the cell which causes the cathode lithium to form at least part of the anode in the cell compartment while the electrolytes join the cathode electrochemically to the anode and isolates the same.

US6017654A is referring to crystalline lithiated transition metal oxide materials having a rhombohedral structure and including divalent cations selected and added in amounts so that all or a portion of the divalent cations occupy sites in the transition metal layers within the crystalline lattice. Said transition metal oxides are useful as cathode materials in secondary cells of lithium ion and include but are not limited to $Li_{1+x}N_{1-y}M_yN_xO_{2(1+X)}$ and $L_1Ni_{1-y}M_yN_xO_p$, where M is a transition metal selected from titanium, vanadium, chromium, manganese, iron, cobalt and aluminum, and N is a group II element selected from magnesium, calcium, strontium, barium and zinc. The materials have improved cyclability and high voltage capacity as cathodes in secondary cells of lithium ion. The production process of the material is also disclosed.

CN104253267 relates to lithium titanate material $Li_4M_xTi_yO_{12}$ spinel type coated with carbon used as cathode material of lithium ion battery, a production method and an application thereof. The cathode material is a $Li_4M_xTi_yO_{12}$ spinel type or a single or multiple metal $Li_4M_xTi_yO_{12}$ compound doped with a metallic element. Its synthesis includes: mixing an organic solution of titanium and a liquid salt of lithium to prepare a sol; maturing such sol to obtain a precursor of lithium titanate gel; calcining the predecessor of such gel to obtain the nano-sized lithium titanate spinel material. Alternatively, it comprises: dispersing such lithium titanate prepared in an organic solution of carbon source, removing the solution and calcining to obtain a lithium titanate spinel/nanometer-sized spinel carbon composite. Compared to the lithium titanate $Li_4Ti_5O_{12}$ prepared by a conventional method, the lithium titanate spinel material has a better multiplicative power characteristic, when such lithium titanate material is used as the battery cathode of lithium ion, the power output of the cell can obviously increase. Despite the efforts, there is still a need for a spinel that allows the manufacture of lithium ion battery with better electrochemical and structural properties at high temperatures, which decrease the dissolution of Mn at high potentials and the Jahn-Teller distortion of the spinel. That is, a spinel that allows the manufacture of positive electrodes for lithium ion batteries with better structural and electrochemical performance.

Brief Description of the Invention

The present invention relates to the field of technologies for powering portable electronic parts, power tools, hybrid and electric vehicles, and energy storage systems from renewable sources. In particular, the invention relates to lithium ion batteries, and more specifically, to a compound useful for the manufacture of cathodes in said lithium ion batteries. Still more particularly, the invention relates to a manganese spinel doped with magnesium, cathodic material comprising the same, preparation method and lithium ion batteries comprising thereof.

The present invention solves the problem of improving the structural and electrochemical performance of the spinel, reducing the particle size on a nanometric scale and doping the structure with magnesium ions. The spinel is prepared by the sol-gel synthesis method assisted by ultrasound and raw materials of Li and Mg were used, typical of the Salar de Atacama, Chile.

The electrochemical performance of the doped spinel of the present invention was evaluated as well as its structural, physical and chemical properties of the material of the invention (Mg-doped Mn spinel, $(LiMg_xMn_{2-x}O_4$, $0.02 < x < 0.1$) and was compared to a pure spinel and a commercial spinel showed that the spinel doped with Mg, presents better electrochemical performance and better structural properties compared to pure and commercial spinel.

A prototype of a 10 Ah capacity lithium-ion battery module was also developed, consisting of individual pouch-type cells, composed of double coating cathodes of $LiMg_{0.05}Mn_{1.95}O_4$, anodes of single and double graphite coating, a polymeric separator and $LiPF_6$ aprotic electrolyte.

The spinel doped with Mg was prepared from the following sol-gel synthesis method assisted by ultrasound, which allowed to obtain active materials with homogeneous morphology and particle size in nanometric scale. The doping with Mg in the manganese spinel increased the average oxidation state of the manganese, increasing the electrical conductivity of the cathodic material without modifying the symmetry of the crystalline cell.

Brief Description of the Figures

Figure 1 shows the configuration of a coin-type cell CR2032.

Figures 2A-2C show an EDS analysis by color mapping for manganese spinels: Figure 2A shows commercial spinel. Figure 2B shows pure spinel. Figure 2C shows spinel doped with Mg. Color description: O = yellow color, Mn = red color and Mg = green color.

Figures 3A-3C show SEM images of manganese spinels Figure 3A shows commercial spinel. Figure 3B shows pure spinel. Figure 3C shows spinel doped with Mg.

Figures 4A-4C show X-ray diffraction patterns of manganese spinels. Figure 4A shows spinel to commercial. Figure 4B shows pure spinel. Figure 4C shows spinel doped with Mg.

Figures 5A-5B: Figure 5A shows curves of discharge capacity with the number of cycles. Figure 5B shows impedance spectra of cycles 1 and 100, for a state of 100% loading, of the commercial, pure manganese spinels and commercial manganese spinel doped with Mg.

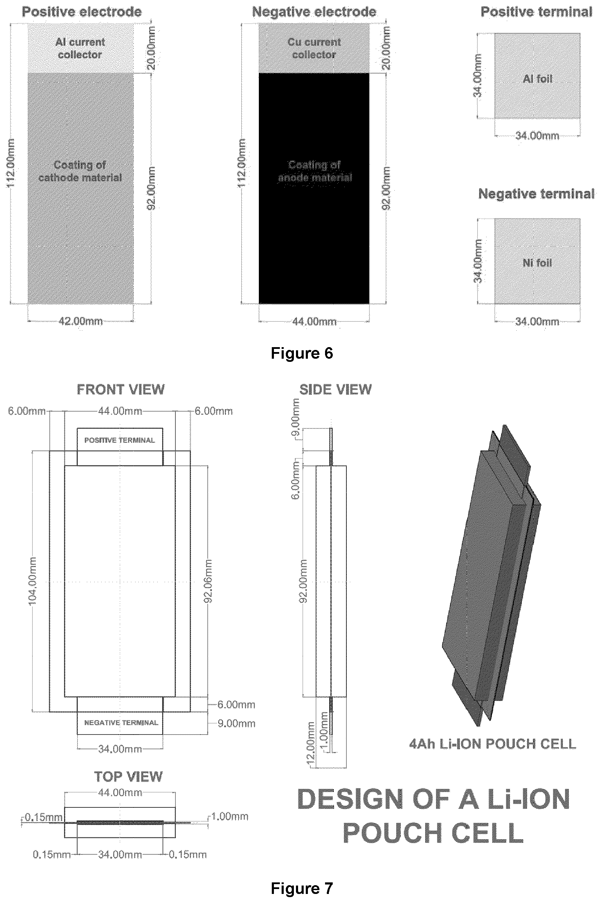

Figure 6 shows sizing drawings of the electrodes and positive and negative terminals.

Figure 7 shows sizing planes of the pouch type cell of 4Ah capacity.

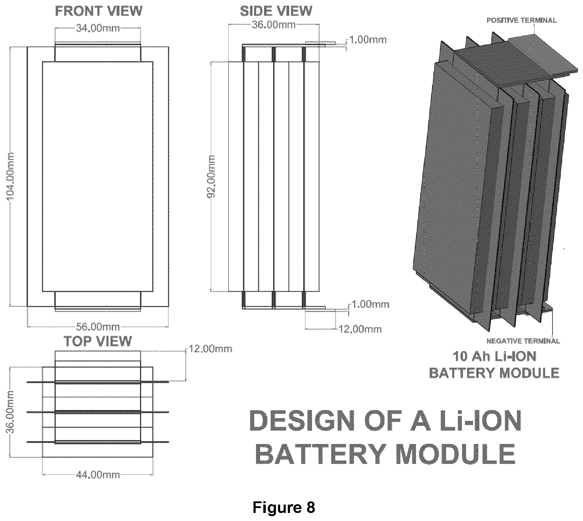

Figure 8 shows sizing drawings of the 10Ah capacity lithium-ion battery module.

Detailed description of the invention

The present invention is related to a manganese spinel doped with magnesium ($LiMg_{0.05}Mn_{1.95}O_4$), cathodic material comprising the same, method of preparation and use in lithium ion batteries.

The evaluation of the electrochemical performance of a Mg-doped Mn spinel, $LiMg_{0.05}Mn_{1.95}O_4$, was performed on a laboratory scale in coin 2032-type cells, composed of a positive electrode of $LiMg_{0.05}Mn_{1.95}O_4$, a metallic lithium negative electrode, a polymeric separator and an aprotic electrolyte of $LiPF_6$. The structural and electrochemical properties of the material of the invention (Mg-doped Mn spinel, ($LiMg_{0.05}Mn_{1.95}O_4$) were compared with a pure spinel and a commercial spinel. The results showed that the spinel doped with Mg, presents better electrochemical performance and better structural properties compared to pure spinel and commercial spinel.

Based on the promising electrochemical results obtained in the coin type cells, a prototype of a 10 Ah capacity lithium ion battery module was developed, consisting of individual pouch cells, composed of single and double $LiMg_{0.05}Mn_{1.95}O_4$ coated cathodes, double-coated graphite anodes, a polymeric separator and aprotic electrolyte of $LiPF_6$. At the present time, commercial solutions for the $LiMn_2O_4$ are not known with characteristics similar to those proposed in the present invention.

The ultrasound-assisted sol-gel synthesis method that was used to prepare the spinel doped with Mg, proved to be efficient for the preparation of active materials, applied to lithium ion batteries, with homogeneous morphology and particle size in nanometric scale. The doping with Mg in the manganese spinel - without consent with any theory, would have increased the average oxidation state of the manganese, which increased the electrical conductivity of the cathode material, and on the other hand, does not modify the symmetry of the crystalline cell. Manganese spinel doped with magnesium proved to possess physical, chemical and electrochemical properties superior to commercial spinel and pure spinel. The electrochemical performance of manganese spinel doped with Mg, especially during cycling tests, it can be significantly improved with the optimization of a synthesis method and a heating treatment.

Example 1: Preparation of manganese spinel doped with magnesium

Pure spinel ($LiMnO_4$) and spinel doped with Mg ($LiMg_{0.05}Mn_{1.95}O_4$) were synthesized by means of the sol-gel method assisted by ultrasound. For the synthesis of manganese spinels, lithium and manganese raw materials were used: $Li_2CO_3$ (battery grade > 99.5%, Rockwood - Chile) and $Mn(CH_3COO)_2$ (> 99%, Sigma Aldrich), respectively; in addition to the addition of $Mg(OH)_2$ ($\geq$ 99%, Fluka Analytical) for the spinel doped with magnesium.

For the synthesis, two aqueous solutions were prepared. The first solution corresponds to the dissolution in stoichiometric quantities of the precursors of metal ions, $Li_2CO_3$ and $Mn(CH_3COO)_2$ for the pure spinel and $Li_2CO_3$, $Mn(CH_3COO)_2$ and $Mg(OH)_2$ for the spinel doped with Mg, in distilled water at room temperature and the second solution corresponds to the dissolution of the organic precursors ethylene glycol and citric acid in distilled water. Both aqueous solutions were mixed under continuous agitation. The pH of the resulting solution was adjusted between a range of 6 to 6.5 by adding ammonium hydroxide, thereby obtaining a "sol". The "sol" was subjected to sonication for 2.5 hours using an ultrasound bath and then heated to 80°C to evaporate the water content and obtain the "gel". Subsequently, the "gel" was dried in a muffle at 170°C for 12h. The "dry gel" or synthesis precursor obtained was ground in an agate mortar and sieved for subsequent Thermogravimetric (TG) analysis. Using this technique, the optimal time/temperature programming for the heat treatment of the synthesis method was determined. Finally, the powders of the synthesis precursor were calcined in air atmosphere at 500°C for 4h and at 750°C for 12h to finally obtain the pure manganese spinel ($LiMn_2O_4$) and the spinel doped with magnesium, ($LiMg_{0.05}Mn_{1.95}O_4$).

Example 2 Preparation of cathodic coatings

For the manufacture of the cathodic coatings, it was prepared a suspension consisting of a mixture of 90% by weight of cathodic active material [pure manganese spinel ($LiMn_2O_4$) or spinel doped with Mg ($LiMg_{0.05}Mn_{1.95}O_4$) or commercial spinel ($Li_{1.16}Mn_{1.84}O_{3.996}S_{0.004}$), 5% by weight of carbon black as a conductive additive and 5% by weight of PVdF (polyvinylidene difluoro) as a binder in NMP solution (n-methyl pyrrolidone). The mixing process of the coating suspension was carried out in a paddle mixer under static vacuum conditions (= 0.1 atm) to minimize water contamination in the suspension. The different constituents of the positive electrode, cathodic active material, conductive additive and binder were added one by one to minimize agglomeration and achieve homogeneity of the suspension.

The suspension obtained was deposited on Al paper, as a current collector, to perform the cathodic coating and then subjected to a pre-drying process in the presence of air for 12 hours, to fix the cathode cover on the current collector.

Next, a calendering of the cathodic coating was carried out to improve the adhesion of the cathodic suspension on the aluminum foil and establish the porosity of the coating according to the following expression:

$$\phi = 1 - V_h/V_s$$

wherein $V_h$ is the volume of the wet cathodic coating and $V_s$ is the volume of the dry cathodic coating. Finally, the cathodic coating was subjected to a final vacuum drying process for 12 h, in order to eliminate all the water content. The completely dry cathodes were cut in circles with a diameter of 9/16" (1.43 cm) Table 1 details the characteristics of the prepared cathodes.

Table 1 Formulation and loading parameters of the cathodes used in CR2032 cells

| Description | Characteristics |
|---|---|
| Cathodic active Material | 90% wt |
| Binder | 5% wt PVDF |
| Conductor Additive | 5% wt carbon black |
| Coating Area | 1.60 cm$^2$ |
| Coating Density | 6.25 mg cm$^{-2}$ |
| Al current collector | 15 $\mu$m |
| Coating thickness | 100 $\mu$m |
| Porosity | 35% |

Example 3: Characterization of physical and chemical properties

The physical and chemical properties of the synthesized cathode materials and commercial material were determined by applying the following characterization techniques:

-   Solid Picnometry, to determine the apparent density of the synthesized cathode active compounds and the commercial product.
-   Scanning Electron Microscopy with X-ray Dispersion Spectroscopy detector (SEM-EDS, TESCAN, Vega 3 LMU), to study the morphology, homogeneity, particle size on a microchrome scale and elemental composition of pure spinel, spinel doped with Mg and commercial spinel.
-   Atomic Force Microscopy - Raman (AFM RAMAN, WITec, alpha300), to determine the particle size of the cathode materials synthesized in the nanometer scale.
-   Diffraction of X-rays for crystalline powder (DRX, Bruker, D8 Advance-A25) using Cu Ka radiation, to determine and compare the structural parameters and identify the phases, structures and crystalline defects of the synthesized spinel and commercial spinel.

Electrochemical measurements

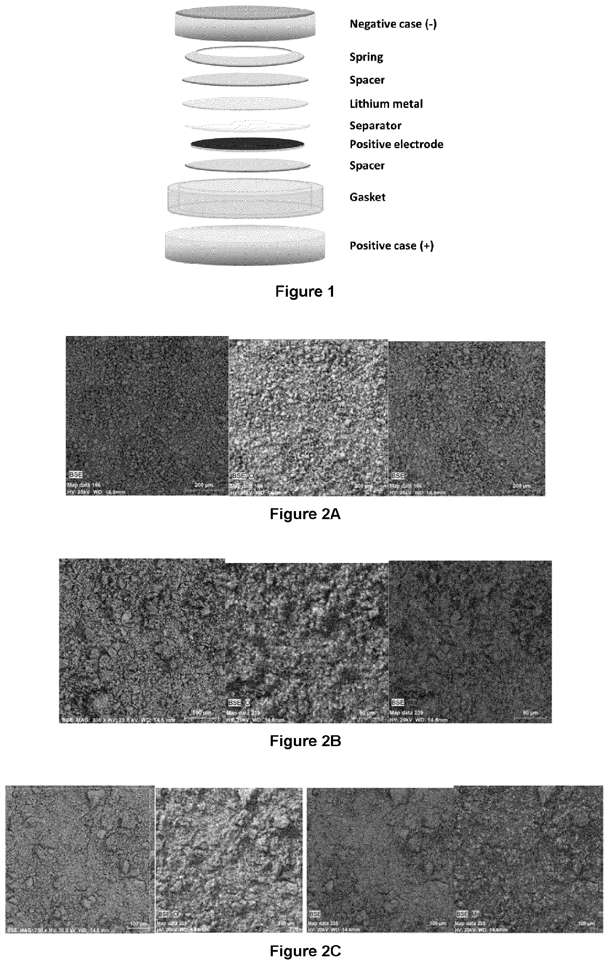

To evaluate the electrochemical performance of the cathode materials, CR2032 coin-type lithium ion cells were manufactured. The coin cells (Figure 1) consist of a cathode, a metallic lithium anode, a polymeric separator and 1M LiPF$_6$ electrolyte in EC: DMC: EMC (1: 1: 1 by weight). The cells were assembled in a glovebox in Argon controlled atmosphere (H$_2$O, O$_2$ < 2 ppm), to minimize the effect of moisture and oxygen.

-   Cycling tests (Battery Analyzer, BST8-WA), coin cell load/unload tests were performed according to the CC-VC protocol (constant current - constant voltage). The activation procedure of the cells was carried out between 3.0 V and 4.8 V (versus Li+/Li) at a constant current of C/10 for 3 cycles. The extended cycling tests were performed between 3.0 V and 4.4 V (versus Li+/Li) at a constant current of C/3 per 100 cycles. The cycling protocol is detailed in Table 2.

-   Impedance measurements (Autolab, PGSTAT302N), the measurement of the electrochemical impedance of the coin 2032 cells was carried out in a range of 20 cycles of charge/discharge, using a frequency range of 100kHz to 10mHz with a signal amplitude of 5mV for a state of charge of 100%, 50% and 0%.

Table 2 Cycling test protocol

|  | Protocol of cycling tests | | |
| --- | --- | --- | --- |
|  | Number of cycles | Range of Voltage | Velocity of constant current |
| Cycles of activation | 3 | 3.0V-4.8V | C/10 |
| Succesive cycles | 100 | 3.0V-4.8V | C/3 |

Comparative analysis between the commercial spinel and spinel doped with Mg of the invention, elemental chemical analysis and bulk density
The stoichiometries of the commercial, pure, magnesium-doped manganese spinels of the invention were elucidated from the elemental compositions provided by the EDS measurements, as shown in Table 3.
The average oxidation state of the manganese in each oxide with spinel structure, whether commercial or pure or doped with magnesium (Table 3), was determined by the charge balance of its different constituent elements based on the electroneutrality of each molecule. spinel oxide.

Table 3 Stoichiometries of manganese spinels, commercial, pure and doped with Mg, calculated from the EDS measurements

| Description | Commercial LMO | | Pure LMO | | Mg doped LMO | |
| --- | --- | --- | --- | --- | --- | --- |
| Element | EDS atomic percent (%) | Molar ratio | EDS atomic percent (%) | Molar ratio | EDS atomic percent (%) | Molar ratio |
| Mn | 31.51 | 1.840 | 33.62 | 2.0 | 32.25 | 1.95 |
| O | 68.42 | 3.996 | 66.38 | 4.0 | 66.93 | 4.05 |
| S | 0.07 | 0.004 |  |  |  |  |
| Mg |  |  |  |  | 0.83 | 0.05 |
| Total | 100 |  | 100 |  | 100 |  |
| Stoichiometry | $Li_{1.15}Mn_{1.84}O_{3.996}O_{0.004}$ | | $LiMn_2O_4$ | | $LiMg_{0.05}Mn_{1.95}O_4$ | |
| Average Oxidation state of Mn | $3.7^+$ | | $3.5^+$ | | $3.6^+$ | |

The elemental quantification of the commercial spinel (Table 3) showed the presence of sulfur in small amounts and an excess in the concentration of lithium. The commercial spinel has a co-doped crystalline structure; on the one hand, cationic doping with lithium ions that partially replace the manganese content, allowing to obtain as a result - without consent with any theory, an increase in the average oxidation state, high electrical conductivity and greater load capacity of the active material. On the other hand, anodic doping with sulfur ions that partially replace the oxygen concentration. Without consenting to any theory, the addition of sulfur ions would improve the structural stability of the spinel and reduce/eliminate the dissolution of Mn at high potentials, because sulfur would form stronger Mn-S bonds in comparison to those formed by oxygen O-S. An exact stoichiometric ratio of 1: 2: 4 for Li: Mn: O was evidenced for the pure spinel (Table 3) synthesized by the sol-gel method assisted by ultrasound.
Regarding manganese spinel doped with Mg, the elemental analysis (Table 3) showed the presence of a spinel with Mg cationic doping. Without consenting to any theory, the small amounts of magnesium ions would replace partially the manganese content in the structure of the spinel; which would result in a higher average oxidation state compared to pure spinel, high electrical conductivity and greater structural stability. The EDS compositional analysis, by elementary mapping using false color images (Figures 2A-2C), shows a homogeneous distribution of the main components of the three manganese spinels: commercial spinel, pure spinel and spinel doped with Mg, respectively. The measurement of the apparent density of the commercial spinel and synthesized spinels (pure and doped with Mg) was carried out by means of pycnometry, using distilled water at room temperature, as shown in Table 5.

Particle size and morphology

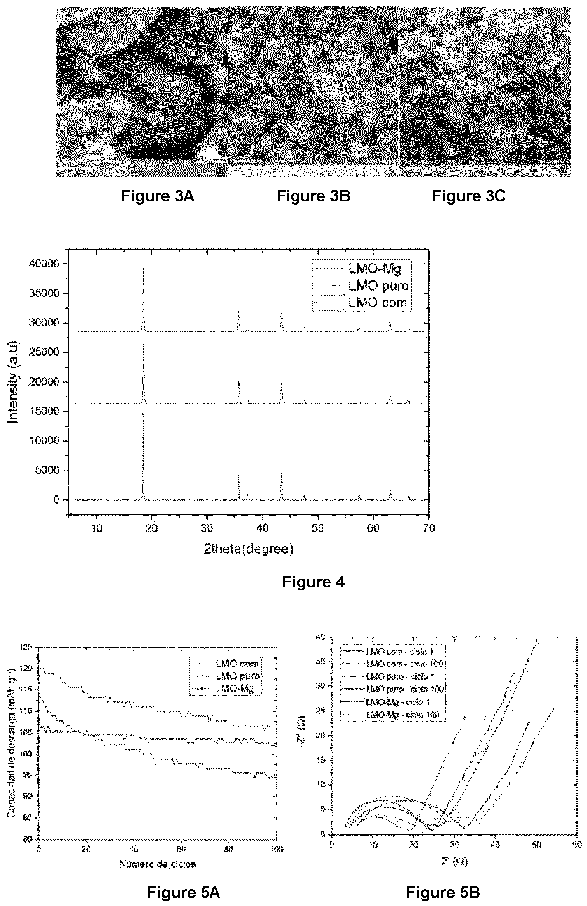

Figures 3A-3C show the SEM images of the commercial manganese spinel, pure spinel and spinel doped with magnesium, respectively. Figure 3A shows that powders of active material of the commercial spinel are composed of agglomerated particles with an average diameter of 18.5 $\mu$m, which in turn are composed of fine particles with an average diameter of 500 nm. The agglomerated particles have an irregular morphology and a wide dispersion in the particle size distribution (particles of inhomogeneous size); on the other hand, it can be observed that each fine particle presents a homogeneous morphology of the cubic type, typical of the crystalline structure of the Mn spinels.

Figures 3B and 3C show the powders of the cathode materials synthesized via sol gel assisted by ultrasound: pure spinel and spinel with Mg doping, respectively. In both images, it can be seen that the powders are composed of fine particles of morphology and homogeneous size, properties that are attributed to the synthesis method. In both active powders a morphology of the spherical type is demonstrated and with an average particle size of 125 nm, this last measurement was made by Atomic Force Microscopy (AFM).

Crystal structure

Figures 4A-4C show the X-ray diffraction patterns of the spinels analyzed. The diffraction branches present eight characteristic peaks at $2\theta$ angles and their corresponding crystal planes as shown in Table 4.

Table 4 Characteristic peaks of X-ray diffraction patterns recorded for manganese spinels, commercial, pure and doped with magnesium.

| Description | Commercial LMO | | Pure LMO | | Mg doped LMO | |
|---|---|---|---|---|---|---|
| No. of characteristics peaks | $2\Theta$ angles | Crystal plane | $2\Theta$ angles | Crystal plane | $2\Theta$ angles | Crystal plane |
| 1 | 18.44 | (1 1 1) | 18.52 | (1 1 1) | 18.45 | (1 1 1) |
| 2 | 35.67 | (3 1 1) | 35.69 | (3 1 1) | 35.66 | (3 1 1) |
| 3 | 37.31 | (2 2 2) | 37.36 | (2 2 2) | 37.28 | (2 2 2) |
| 4 | 43.35 | (4 0 0) | 43.37 | (4 0 0) | 43.33 | (4 0 0) |
| 5 | 47.47 | (3 3 1) | 47.50 | (3 3 1) | 47.42 | (3 3 1) |
| 6 | 57.36 | (5 1 1) | 57.37 | (5 1 1) | 57.27 | (5 1 1) |
| 7 | 63.00 | (4 4 0) | 62.99 | (4 4 0) | 62.92 | (4 4 0) |
| 8 | 66.27 | (5 3 1) | 66.21 | (5 3 1) | 66.19 | (5 3 1) |

As a result of the refinement of the X-ray patterns, by means of the Rietveld method, it was determined that the three spinels have a crystalline structure with cubic symmetry and spatial group Fd3m. In addition, it was verified that the co-doping with sulfur-lithium, for the commercial spinel, and the doping of magnesium, for the doped spinel, do not modify the crystalline structure. Regarding the cell parameters, it was evidenced that the pure spinel has a smaller cell dimension compared to the commercial spinel and the spinel doped with Mg, which have a similar cell dimension. The small increase in length of the commercial spinel cell parameter, co-doped with sulfur and lithium, compared to pure spinel, is attributed to the incorporation of the sulfur ion ($S^{2-}$) in the crystalline structure of the manganese spinel; this is due to the fact that the sulfide ion has a greater ion radius with respect to the oxygen ion ($O^{2-}$), besides forming stronger bonds with manganese that improve the structural stability of the manganese spinel. In contrast, the increase in the length of the spinel cell parameter doped with Mg is attributed to the substitution of the $Mn^{3+}$ ion by the $Mg^{2+}$ ion, and that it has a greater ion radius than the $Mn^{4+}$ ion. The monovalent oxidation state of the $Mg^{2+}$ ion remains unchanged during the process of intercalation and de-interleaving of the lithium ion in a way that reduces the corresponding effects of expansion and contraction of the crystalline cell, improving the structural stability of the manganese spinel during cycling at temperatures in environmental and high conditions.

Table 5 shows the data obtained from the characterization of the physical and chemical properties of manganese spinels: commercial spinel $Li_{1.15}Mn_{1.84}O_{3.996}O_{0.004}$, pure spinel and spinel doped with Mg ($LiMg_{0.05}Mn_{1.95}O_4$).

Table 5 Data on the physical and chemical properties of commercial manganese spinels, pure spinel and spinel doped with magnesium

| Description | Commercial LMO | Pure LMO | Mg doped LMO |
|---|---|---|---|
| Particle size (nm) | 500 | ~125 | ~125 |
| Density (gcm$^{-1}$) | 4.23 | 4.23 | 4.02 |
| Crystal system | Cubic | Cubic | Cubic |
| Spatial group | Fd3m | Fd3m | Fd3m |
| Cell Parameter (A) | 8.345 | 8.341 | 8.355 |

Cycling and impedance tests

After the 100 cycles of loading/unloading the coin cells assembled with the cathodes of the commercial manganese spinel and the synthesized spinel of the invention, the processing of the cycling data, as shown in Figure 5A, showed that the cathode manufactured with the manganese spinel doped with Mg of the invention, has a higher initial load capacity compared to pure spinel (5.6% more) and commercial spinel (13% more). Although, the cathode manufactured with the commercial spinel has a better load retention in the cycle, the load capacity of the spinel doped with magnesium is always above the load capacity of the commercial spinel and with the increase of the number of cycles the loss of capacity, stabilizes and shows a linear behavior. On the other hand, the pure spinel showed a lower performance in cycling compared to the commercial spinel and the spinel doped with Mg. However, it has a higher load capacity compared to the commercial cathode, however, after 100 cycles its capacity decreases compared to the spinel doped with Mg and the commercial spinel. Regarding the tests of measure measured during cycles 1 and 100 for a state of charge of 100% (Figure 5B). It was evidenced that the cathode manufactured with the commercial manganese spinel presents high values of impedance in comparison to the cathode synthesized by the sol-gel method assisted by ultrasound and doped with Mg according to the invention. This effect is mainly attributed to the particle size of the active material, because a smaller particle size increases the chemical reactivity of the material during the electrochemical loading and unloading reactions. The synthesis method used to obtain the pure spinel and the spinel doped with Mg, guarantees the formation of fine and homogeneous particles in nanometric scale, this property is an advantage compared to the commercial spinel which is composed of particles in scale micrometer and therefore with less chemical reactivity.

The impedance value of the cathode of the invention, after 100 cycles was 49% lower compared to the commercial cathode of manganese spinel. This difference should be due to no theory, low particle size, high chemical reactivity and high average oxidation state of manganese, which increases the electrical conductivity of the material and is attributed to the incorporation of magnesium ions in the structure of the manganese spinel.

Table 6 shows the results obtained from the stereochemical measurements for the commercial spinel and the synthesized spinel.

Table 6 Data of the electrochemical measurements of commercial manganese spinel (LMO com), pure spinel (pure LMO) and magnesium doped spinel of the invention

| Description | Commercial LMO | Pure LMO | Mg doped LMO |
|---|---|---|---|
| Initial capacity (mAh g-1) | 106.36 | 113.33 | 120.00 |
| Final capacity (mAh g-1) | 101.82 | 94.44 | 105.60 |
| Average coulombic efficiency (%) | 98.56 | 97.75 | 98.44 |
| Capacity retention | 95.73 | 83.33 | 87.96 |

Example 4: Design of the prototype of a 10Ah capacity lithium-ion battery module.

For the design of the lithium ion battery module with the cathodic material developed based on the material of the present invention, a program developed in Excel software, called BatPac v2.2, was used. This tool provides necessary data for the design and dimensioning of the electrodes, cells, modules and packs that make up a complete lithium ion battery, this according to the energy and power criteria required by the designer.

Table 7 shows the design criteria of the lithium ion battery module used in the BatPac v2.2 tool.

Table 7 Design criteria for lithium ion batteries

| Battery Type | Ev[1] |
|---|---|
| SOC[2] to nominal potency, % | 20 |
| Potency Duration, s | 10 |
| Range of SOC to utilizable energy, % | 10-95 |
| Cell thickness, mm | 12 |
| [1]EV = Electric vehicles [2]SOC= State of Charge | |

In this way, referring to the design criteria (Table 7) and the initial experimental parameters required, the Excel tool was executed with the following specifications:

- The type of battery selected for the simulation, corresponds to a lithium ion battery applied to electric vehicles, composed of unit cells type pouch (prismatic cell of malleable polymer/aluminum housing) of 4Ah capacity and 12 mm thickness, with a positive electrode length/width ratio equal to 2.2 and a usable energy range of 85%.
- The selected system corresponds to a battery composed of the positive electrode (cathode developed based on the material of the present invention) of lithium manganese oxide doped with magnesium, ($LiMg_{0.05}Mn_{1.95}O_4$) (LMO-Mg), with spinel structure and by a negative electrode (anode) of graphite, (G), with layered structure.
- The initial input parameters correspond to experimental measurements recorded in coin type cells (rigid metal shell button cell in the form of a disk) CR2032, corresponding to the selected system LMO-Mg/G.

The data obtained from the simulation show that to manufacture a lithium ion pouch cell, with an LMO-Mg/G capacity of 4Ah, 23 double-coated electrodes (12 positive electrodes and 1 negative electrodes) and 2 electrodes are required. Simple negative coating. The arrangement of the electrodes is alternately, starting and ending with a negative electrode of simple coating.

Figure 9 shows the sizing planes of the positive electrode, constituted by a manganese spinel cover doped with magnesium deposited on an Al current collector, and negative electrode, constituted by a graphite cover deposited on a current collector of Cu; as well as the planes of the positive terminals of Al and negative of Ni. For the manufacture of the lithium-ion battery module, the parallel connection of three individual cells is necessary to reach a capacity of 10Ah. The three cells are soldered by their positive terminals of Al and negative of Ni, respectively. The end of each terminal of the module is soldered to a copper buss (buss); such connectors will be used for the final installation of the positive and negative terminals of the module.

A better detail of the parallel connection of the cells can be seen in Figure 11, which shows the sizing drawings of the 10 Ah lithium-ion battery module.

**Claims**

1. Manganese spinel preparation method doped with magnesium formula $LiMg_{0.05}Mn_{1.95}O_4$ comprising: synthesize pure spinel by means of the sol-gel method assisted by ultrasound, using lithium and manganese raw materials: $Li_2CO_3$, $Mn(CH_3COO)_2$ and $Mg(OH)_2$, following the following steps:

   a) prepare a first solution corresponding to the dissolution in stoichiometric quantities of the metal ion precursors, $Li_2CO_3$, $Mn(CH_3COO)_2$ and $Mg(OH)_2$, in distilled water at room temperature;
   b) preparing a second solution corresponds to the dissolution of the organic precursors ethylene glycol and citric acid in distilled water;
   c) mixing the solutions obtained in steps a) and b) under continuous stirring;
   d) adjusting the pH of the solution resulting from step c) between a range of 7 to 7.5;
   e) subjecting the sol obtained in step d) to sonication and then heating to evaporate the water and obtain a gel, and subsequently, dry the same;
   f) grinding and calcining the synthesis precursor obtained in step e) and thus obtaining the spinel doped with magnesium, ($LiMg_xMn_{2-x}O_4$).

**2.** The method of claim 1, comprising $Li_2CO_3$ with battery grade > 99.5% as one of the raw materials.

**3.** The method of claim 1, wherein in step d), the pH is adjusted by adding ammonium hydroxide.

**4.** The method of claim 1, wherein in step e), the sonication is carried out using an ultrasonic bath.

**5.** The method of claim 1, wherein in step e) it is heated up to 80°C.

**6.** The method of claim 1, wherein in step e) the drying is performed at 175°C.

**7.** The method of claim 1, wherein the calcination of step f) is carried out in an air atmosphere at 500°C for 4h and at 750°C for 12h.

**8.** Method of preparing cathodic coating of cells for lithium ion battery using a manganese spinel doped with magnesium of formula $LiMg_xMn_{2-x}O_4$, comprising:

a) preparing a suspension consisting of a mixture of 90% by weight of the Mg-doped spinel prepared according to any of claims 1 to 7, 5% by weight of carbon black as a conductive additive and 5% by weight of PVDF (polyvinylidene difluoride) as a binder in NMP solution (n-methyl pyrrolidone);
b) mixing the suspension prepared in step a) minimizing agglomeration and ensuring homogeneity by adding the different constituents of the electrode, $LiMg_{0.05}Mn_{1.95}O_4$ cathodic active material one by one conductive additive and binder;
c) depositing the suspension obtained in b) on Al paper and dry to fix it and obtain cathodic coating;
d) optionally calendering the cathodic coating is performed to improve the adhesion of the cathodic suspension on the Al paper and to establish the porosity of the coating;
e) vacuum dry to remove all water content.

**9.** Manganese spinel doped with magnesium formula $LiMg_{0.05}Mn_{1.95}O_4$ comprising a diffractogram with eight characteristic peaks at angles $2\theta$ of 18.45, 35.66, 37.28, 43.33, 47.42, 57.27, 62.92, 66.19 for CuKa radiation, corresponding to the crystal planes (1 1 1), (3 1 1), (2 2 2), (4 0 0), (3 3 1), (5 1 1), (4 4 0) and (5 3 1), respectively.

**10.** The spinel of claim 9, wherein the active powders of said spinel have a morphology of the spherical type and an average particle size of 125 nm.

**11.** The spinel of claim 9 wherein the oxidation state of manganese is $3.6^+$.

**12.** The spinel of claim 9, wherein it has a cubic cell Fd3m with a cell parameter of a = 8.355 Á.

**13.** The spinel of claim 9, wherein it has a particle size of approx. 125 nm.

**14.** The spinel of claim 9 wherein that it has a density of 4.2 $gcm^{-1}$.

**15.** Use of the magnesium doped spinel of formula $LiMg_xMn_2O_4$ prepared according to any of claims 1 to 7 or defined according to any of claims 9 to 14 useful to manufacture a lithium ion battery.

**16.** Lithium-ion battery comprising magnesium doped spinel of formula $LiMg_{0.05}Mn_{1.95}O_4$ prepared according to any of claims 1 to 7 or as defined by any of claims 9-14.

**17.** The battery of claim 16 wherein it is composed of unit cells type pouch (prismatic cell of malleable shell of polymer/aluminum) of 4Ah capacity and 12 mm thick.

**18.** The battery of claim 16 wherein it is composed of a positive (positive) electrode of manganese oxide lithium doped with magnesium ($LiMg_{0.05}Mn_{1.95}O_4$) with spinel structure and by a negative electrode (anode) of graphite, (G), with layered structure.

**19.** The battery of claim 17 wherein said lithium ion pouch cell of 4Ah capacity comprises 23 double coating electrodes, including 12 positive electrodes and 11 negative electrodes; and also 2 negative single coating electrodes, where the electrodes are arranged alternately, starting and ending with a negative electrode of simple coating.

Negative case (-)

Spring

Spacer

Lithium metal

Separator
Positive electrode

Spacer

Gasket

Positive case (+)

Figure 1

Figure 2A

Figure 2B

Figure 2C

Figure 3A          Figure 3B          Figure 3C

Figure 4

Figure 5A                    Figure 5B

**Figure 6**

**Figure 7**

FRONT VIEW

34.00mm

104.00mm

56.00mm

TOP VIEW

36.00mm

44.00mm

12.00mm

SIDE VIEW

36.00mm

1.00mm

92.00mm

1.00mm

12.00mm

POSITIVE TERMINAL

NEGATIVE TERMINAL

10 Ah Li-ION
BATTERY MODULE

DESIGN OF A Li-ION
BATTERY MODULE

**Figure 8**

EP 3 683 870 A1

## INTERNATIONAL SEARCH REPORT

| International application No. |
|---|
| PCT/CL2018/050076 |

**A.  CLASSIFICATION OF SUBJECT MATTER**

(CIP) H01M4/36,  4/505, 10/052, 10/0525 (2018.01)

According to International Patent Classification (IPC) or to both national classification and IPC

**B.  FIELDS SEARCHED**

Minimum documentation searched (classification system followed by classification symbols)

(CIP) H01M4/36, 4/505, 10/052, 10/0525   (CPC) H01M4/36, 4/505,10/052, 10/0525

Documentation searched other than minimum documentation to the extent that such documents are included in the fields searched

Electronic data base consulted during the international search (name of data base and, where practicable, search terms used)

STN, Esp@cenet, USPTO, Derwent, Google,  Dialog ProQ, Inapi

**C.  DOCUMENTS CONSIDERED TO BE RELEVANT**

| Category* | Citation of document, with indication, where appropriate, of the relevant passages | Relevant to claim No. |
|---|---|---|
| X<br>Y | ZHANG, H. et al. Microwave synthesis of $LiMg0.05Mn1.95O4$ and electrochemical performance at elevated temperature for lithium-ion batteries. J Solid State Electrochem (2014) 18:569–575<br>DOI 10.1007/s10008-013-2293-y<br>The whole document | 1, 2, 4, 8-18<br>3, 5-7, 19 |
| X<br>Y | ZHAO, H. et al. Synthesis and electrochemical characterizations of spinel $LiMn1.94MO4$ (M ¼ Mn0.06, Mg0.06, Si0.06, (Mg0.03Si0.03)) compounds as cathode materials for lithium-ion batteries. (2015) Journal of Power Sources 282 :118-128<br>DOI: 10.1016/j.jpowsour.2015.02.049<br>The whole document | 8-18<br>3, 5-7 |
| Y | CA2455819 (A1) (MASSACHUSETTS INSTITUTE OF TECHNOLOGY) 23/07/2013<br>The whole document | 19 |

☒  Further documents are listed in the continuation of Box C.     ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30/11/2018          30/ November /2018 | 10/12/2018     10/ December /2018 |
| Name and mailing address of the ISA/ | Authorized officer |
| INAPI, Av. Libertador Bernardo O'Higgins 194, Piso 17, Santiago, Chile | SCHMIDT ACHARÁN, Paula Andrea |
| Facsimile No. | Telephone No. |

18

**INTERNATIONAL SEARCH REPORT**

International application No.

PCT/CL2018/050076

C (Continuation).    DOCUMENTS CONSIDERED TO BE RELEVANT

| Category* | Citation of document, with indication, where appropriate, of the relevant passages | Relevant to claim No. |
|---|---|---|
| A | SUBRAMANIA, A. et al. Synthesis and characterization of $LiMg_yMn_{2-y}O_4$ cathode materials bya modified Pechini process for lithium batteries. Bull. Mater. Sci.,(2005), 28, No. 7:663-667<br>http://www.electrochemsci.org/papers/vol3/3020136.pdf<br>The whole document | |
| P, X | SHAO, M. et al The Effect of Calcination Time on the Electrochemical Performance of Spinel $LiMg_{0.08}Mn_{1.92}O_4$ Prepared by a Solid-State Combustion Method<br>Int. J. Electrochem. Sci., (2017), 12: 11997-12008, doi: 10.20964/2017.12.69<br>The whole document | 8, 9 |
| A | BANOV, B.I. et al. Environmentally friendly cathode materials for Li-ion batteries. Bulgarian Chemical Communications,(2011) Volume 43, N1:7-16.<br>http://www.bcc.bas.bg/BCC_Volumes/Volume_43_Number_1_2011/Volume_43_Number_1_2011_PDF/2011-43-1_1.pdf<br>The whole document | |
| A | AMARAL, F. et al.  Pechini Synthesis of Nanostructured $Li_{1.05}M_{0.02}Mn_{1.98}O_4$ (M = Al3+ or Ga3+). (2015) Mat. Res. vol.18 supl.2: 1-23.<br>http://dx.doi.org/10.1590/1516-1439.361514<br>The whole document | |
| A | IN-SEONG JEONG et al. Electrochemical properties of Electrochemical properties of $LiMg_yMn_{2-y}O_4$ spinel phases for rechargeable lithium batteries. Journal of Power Sources (2001) 102:55-59<br>https://fdocuments.com/document/electrochemical-properties-of-limgymn2yo4-spinel-phases-for-rechargeable.html<br>The whole document | |
| A | CHENGGONG, Han. Development of High Performance Manganese-based Cathode Materials for Li-ion Batteries theses (doctoral) Hokkaido University, (2017-03-23)[en línea], [recuperado 29-11-2018], Recuperado de internet: DOI 10.14943/doctoral.k12755<br>The whole document | |
| A | CABRERA, S. et al. Perspectivas en el procesamiento de materiales. Electrodos para baterías de ión litio en Bolivia. Revista Boliviana de Química (2012):29 N°1:15-38<br>http://www.bolivianchemistryjournal.org,<br>The whole document | |

INTERNATIONAL SEARCH REPORT
Information on patent family members

| | | International application No. |
|---|---|---|
| | | PCT/CL2018/050076 |

| CA2455819 (A1) | 23-07-2013 | CA2455819 (C) | 13-02-2003 |
|---|---|---|---|
| | | AT405960 (T) | 15-09-2008 |
| | | AU4162902 (A) | 03-06-2002 |
| | | AU2002330924 (A1) | 17-02-2003 |
| | | CA2426156 (A1) | 30-05-2002 |
| | | CA2426156 (C) | 30-05-2002 |
| | | CA2729504 (A1) | 30-05-2002 |
| | | CA2729504 (C) | 30-05-2002 |
| | | CN1278441 (C) | 21-01-2004 |
| | | CN1470083 (A) | 21-01-2004 |
| | | CN100595964 (C) | 15-11-2006 |
| | | CN1864298 (A) | 15-11-2006 |
| | | CN1901255 (A) | 24-01-2007 |
| | | CN1901255 (B) | 24-01-2007 |
| | | EP1352436 (A2) | 15-10-2003 |
| | | EP1352436 (B1) | 15-10-2003 |
| | | EP1433217 (A2) | 30-06-2004 |
| | | ES2312487 (T3) | 01-03-2009 |
| | | JP2005525674 (A) | 25-08-2005 |
| | | JP4619000 (B2) | 25-08-2005 |
| | | JP2004525481 (A) | 19-08-2004 |
| | | JP2006100280 (A) | 13-04-2006 |
| | | JP2007066913 (A) | 15-03-2007 |
| | | JP2010278017 (A) | 09-12-2010 |
| | | JP2011253820 (A) | 15-12-2011 |
| | | JP2012182141 (A) | 20-09-2012 |
| | | KR100912754 (B1) | 16-05-2003 |
| | | KR20030038826 (A) | 16-05-2003 |
| | | KR100929452 (B1) | 09-09-2008 |
| | | KR20080081377 (A) | 09-09-2008 |
| | | KR101178643 (B1) | 31-08-2009 |
| | | KR20090092348 (A) | 31-08-2009 |
| | | KR101249130 (B1) | 19-11-2010 |
| | | KR20100122131 (A) | 19-11-2010 |
| | | KR101249133 (B1) | 23-08-2011 |
| | | KR20110094359 (A) | 23-08-2011 |
| | | KR101314469 (B1) | 14-05-2012 |
| | | KR20120048038 (A) | 14-05-2012 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106207153
- US 2016329563 A
- CN 106058205
- CN 105932250
- CN 105789568
- CN 104701522
- CN 104538625
- US 2015089797 A
- CN 104112856

- CN 102569781
- CN 102306767
- CN 102122715
- CN 104752711
- US 5928622 A
- US 6274278 B
- US 5316877 A
- US 6017654 A
- CN 104253267